# EUROPÄISCHE PATENTSCHRIFT

(11) **EP 2 145 445 B1**
(45) Veröffentlichungstag und Bekanntmachung des Hinweises auf die Patenterteilung: **15.09.2010**
(21) Anmeldenummer: 08716113.9
(22) Anmeldetag: 28.02.2008
(51) Int. Cl.: H04L 29/06

(54) **VERFAHREN ZUR VERBESSERUNG EINES TCP DATENÜBERTRAGUNGSPROZESSES IM FALL EINER UNTERBRECHUNG DES PHYSIKALISCHEN ÜBERTRAGUNGSMEDIUMS**
METHOD FOR IMPROVING A TCP DATA TRANSMISSION PROCESS IN CASE THE PHYSICAL TRANSMISSION MEDIUM IS DISCONNECTED
PROCÉDÉ PERMETTANT DE PERFECTIONNER UN PROCÉDÉ DE TRANSMISSION DE DONNÉES TCP EN CAS D'INTERRUPTION DU SUPPORT DE TRANSMISSION PHYSIQUE

(30) Priorität: 07.03.2007 DE 102007011071
(43) Veröffentlichungstag der Anmeldung: 20.01.2010
(73) Patentinhaber: T-Mobile International AG, 53227 Bonn (DE)
(72) Erfinder: KLEO, Rémi, 53332 Bornheim (DE)
(74) Vertreter: Riebling, Peter
(86) Internationale Anmeldenummer: PCT/EP2008/001585
(87) Internationale Veröffentlichungsnummer: WO 2008/107115

(56) Entgegenhaltungen:
- US-A1- 2003 095 537
- US-A1- 2005 180 327
- US-A1- 2006 067 222
- DONGWOOK LEE ET AL: "Delayed-duplicated ACK (DDA) algorithm for TCP performance enhancement to overcome packet sequence disruption in fast-handoff of mobile ipV6" DISTRIBUTED COMPUTING SYSTEMS WORKSHOPS, 2004. PROCEEDINGS. 24TH INTER NATIONAL CONFERENCE ON HACHIOJI, TOKYO, JAPAN 23-24 MAR. 2004, PISCATAWAY, NJ, USA,IEEE, 23. März 2004 (2004-03-23), Seiten 98-103, XP010695590 ISBN: 978-0-7695-2087-2
- YUCHUL KIM ET AL: "Considering spurious timeout in proxy for improving TCP performance in wireless networks" GLOBECOM'03. 2003 - IEEE GLOBAL TELECOMMUNICATIONS CONFERENCE. CONFERENCE PROCEEDINGS. SAN FRANCISCO, CA, DEC. 1 - 5, 2003; [IEEE GLOBAL TELECOMMUNICATIONS CONFERENCE], NEW YORK, NY : IEEE, US, Bd. 7, 1. Dezember 2003 (2003-12-01), Seiten 3673-3677, XP010677302 ISBN: 978-0-7803-7974-9

## Beschreibung

Die Erfindung betrifft ein Verfahren zur Verbesserung eines TCP Datenübertragungsprozesses im Fall einer Unterbrechung des physikalischen Übertragungsmediums.

Heutzutage wird das Transmission Control Protocol (TCP) oft gemeinsam mit dem Internet Protocol (IP) von vielen Applikationen der Datenkommunikation, z.B. bei Internetverbindungen oder E-mail, verwendet.

Das TCP ist eine Vereinbarung (Protokoll) darüber, auf welche Art und Weise Daten zwischen Kommunikationspartnern, meist Computern, ausgetauscht werden sollen. Alle Betriebssysteme moderner Computer beherrschen TCP und nutzen es für den Datenaustausch mit anderen Rechnern. Das TCP Protokoll ist ein zuverlässiges, verbindungsorientiertes Transportprotokoll in Computemetzwerken. Es ist Teil der Internetprotokollfamilie, der Grundlage des Internets. Im Unterschied zum verbindungslosen UDP (User Datagram Protocol) stellt TCP einen virtuellen Kanal zwischen zwei Endpunkten einer Netzwerkverbindung (Sockets) her. Auf diesem Kanal können in beide Richtungen Daten übertragen werden. TCP setzt in den meisten Fällen auf das IP (Internet-Protokoll) auf, weshalb häufig auch vom "TCP/IP-Protokoll" die Rede ist. Es ist in Schicht 4 des OSI-Referenzmodells angesiedelt.

Die Menge von Daten, die zu übertragen sind, wird in kleine Pakete getrennt (IP Datenpakete) und dann übertragen. Die Prinzipien, die in dem TCP Standard definiert sind sorgen dafür, dass die IP-Pakete, die während der Übertragung verloren gehen und nicht quittiert (acknowledged) werden, wiederholt übertragen werden.

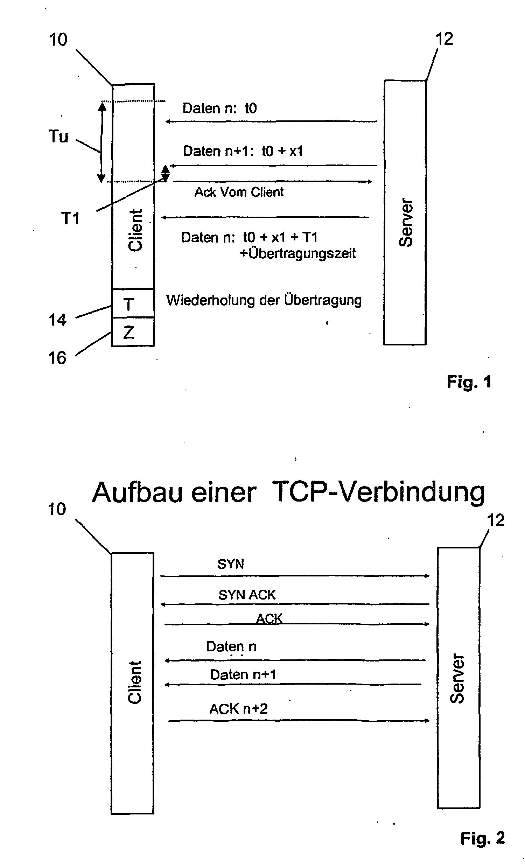

Wie es in Figur 2 dargestellt ist, sehen die TCP Prinzipien, dass die Verbindung zwischen einer datenabrufenden Einrichtung, einem so genannten Client 10, und einer datenbereitstellenden Einrichtung, einem so genannten Server 12 statt finden. Der Client 10 initiiert die Verbindung und holt sich die Daten von dem Server 12. Der Server 12 stellt die Daten zu Verfügung und sorgt dafür dass alle Datenpakete zum Client 10 übertragen werden.
Für einen Verbindungsaufbau übermittelt der Client 10 als erstes eine Anforderungsnachricht, SYN, zum Server 12. Der Server 12 antwortet mit einer Bestätigungsnachricht SYN ACK. Der Client 10 sendet dann ebenfalls eine Bestätigungsnachricht ACK. Beim Aufbau einer TCP-Verbindung kommt ein sogenannter Drei-Wege-Handshake zum Einsatz. Der Kommunikationspartner, der die Verbindung aufbauen will, hier der Client 10, sendet dem anderen ein SYN-Paket (von engl. synchronize) mit einer Sequenznummer. Die Sequenznummern sind dabei für die Sicherstellung einer vollständigen Übertragung in der richtigen Reihenfolge und ohne Duplikate wichtig. Es handelt sich also um ein Paket, dessen SYN-Bit im Paketkopf gesetzt ist. Die Start-Sequenznummer ist eine beliebige - meist zufällig gewählte - Zahl, deren Generierung von der jeweiligen TCP-Implernentierung abhängig ist.

Die Gegenstelle, hier der Server 12, empfängt das Paket und sendet in einem eigenen SYN-Paket im Gegenzug ihre Start-Sequenznummer, die ebenfalls beliebig und unabhängig von der Start-Sequenznummer des Client 10 ist. Zugleich bestätigt sie den Erhalt des ersten SYN-Pakets, indem sie die Sequenznummer des Client um eins erhöht und im ACK-Teil (von engl. acknowledgment = Bestätigung) des Headers zurückschickt. Der Client 10 bestätigt zuletzt den Erhalt des SYN ACK-Pakets durch das Senden eines eigenen ACK-Pakets an den Server. Dieser Vorgang wird auch als "Forward Acknowledgement" bezeichnet. Die Verbindung ist damit aufgebaut.

Zu diesem Zeitpunkt ist die Verbindung aufgebaut und der Server schickt eine vorgegebene Anzahl von Datenpaketen an den Client. Die Anzahl der Datenpakete wurde vorher während des Verbindungsaufbaus zwischen Client und Server verhandelt. Nach der Übertragung der Datenpakete, hier Daten n und Daten n+1, antwortet der Client 10 mit einer weiteren "ACK" Nachricht, hier ACK n+2, und gibt damit dem Server die Information, welche Datenpakete er als nächstes erwartet. Der Server 12 wartet auf diese Nachricht "ACK n+2" des Client. Wenn das "ACK n+2" beim Server empfangen wird, übermittelt der Server die nächsten Datenpakete an den Client 10.

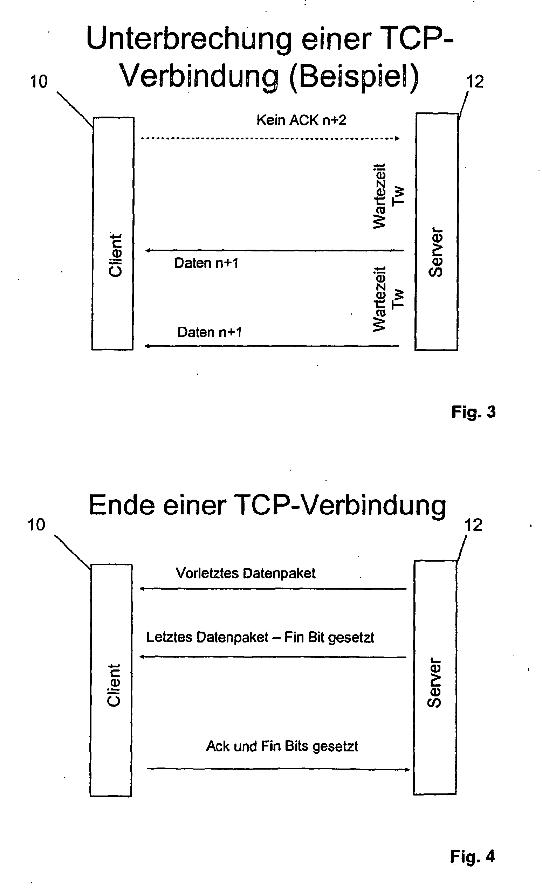

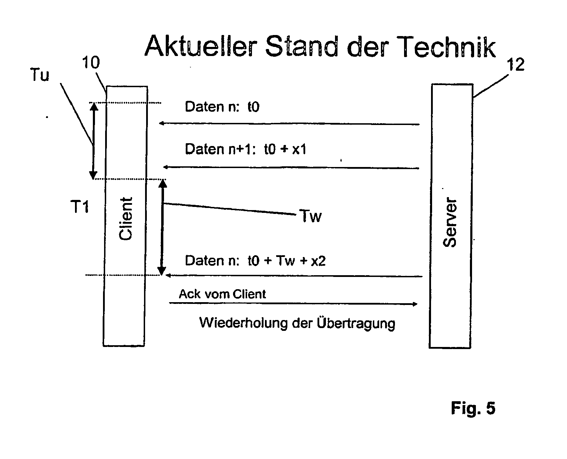

In den Figuren 3 und 5 ist der Fall einer Unterbrechung der TCP Verbindung dargestellt. Wenn beispielsweise die "ACK n+2" Nachricht innerhalb einer vorgegebenen Wartezeit Tw nicht vom Server 12 empfangen wird, übermittelt dieser wieder das letzte Datenpaket, das nicht vom Client quittiert wurde, im Beispiel also Daten n+1. Diese Prozedur bestehend aus warten und gegebenenfalls wiederholtem zusenden der Datenpakete wird mehrmals wiederholt. Die Wartezeit des Client 10 auf die Daten wächst mit der Anzahl der Wiederholung. Typischerweise wartet der Server 12 am Anfang einige Sekunden (beispielsweise 2-3 Sekunden) auf das "ACK n+2". Die Wartezeit Tw wird dann bis auf zirka eine Minute gesteigert, da die Wartezeit in der Regel zwischen zwei Wiederholungen verdoppelt wird.

Figur 4 zeigt den geregelten Verbindungsabbau, der ähnlich wie der Verbindungsaufbau erfolgt. Statt des SYN-Bits kommt das FIN-Bit (von engl. finish = Ende, Abschluss) zum Einsatz, welches dem Client 10 anzeigt, dass keine Daten mehr vom Server 12 kommen. Den Erhalt des Pakets wird seitens des Client 10 wiederum mittels ACK bestätigt. Der Empfänger des FIN-Pakets sendet zuletzt seinerseits ein FIN-Paket, das ihm ebenfalls bestätigt wird.
Obwohl eigentlich vier Wege genutzt werden, handelt es sich beim Verbindungsabbau auch um einen Drei-Wege-Handshake, da die ACK- und FIN-Operationen vom Server zum Client als ein Weg gewertet werden. Zudem ist ein verkürztes Verfahren möglich, bei dem FIN und ACK genau wie beim Verbindungsaufbau im selben Paket untergebracht werden. Die Maximum Segment Lifetime (MSL) ist die maximale Zeit, die ein Segment im Netzwerk verbringen kann, bevor es verworfen wird.

Wenn ein Kommunikationsteilnehmer eine Applikation zur Datenkommunikation, z. B. E-Mail, in einem Mobilfunknetz benutzt, ist die Wahrscheinlichkeit, dass die Datenverbindung unterbrochen wird, viel höher als beispielsweise bei einer Datenverbindung über ein Festnetz. Wenn die Datenverbindung im Mobilfunknetz unterbrochen wird, bleibt die Datenverbindung unterbrochen, solange bis die Wiederholungsprozedur von TCP greift und die Datenübertragung wiederholt wird, auch wenn der physikalische Kanal unmittelbar nach der Unterbrechung wieder zu Verfügung steht.

US 2005/180327 A1 offenbart ein Verfahren zur Verbesserung eines TCP Datenübertragungsprozesses, wobei nach Herstellung einer TCP Verbindung zwischen einem Client und einem Server vom Server ein Datenpaket an den Client übermittelt wird, wobei vom Client der Empfang des Datenpakets gegenüber dem Server durch Übermitteln einer dem empfangenen Datenpaket zugeordneten Bestätigungsnachricht, ACK Nachricht, bestätigt wird. Bei der Übermittlung der ACK Nachricht wird beim Client ein Zeitglied mit einer voreingestellten Zeit gestartet. Dieselbe ACK Nachricht wird vom Client als sogenanntes "duplicate acknowledgement" (DUPACK) wiederholt an den Server übermittelt, falls die Datenpakete nicht in der richtigen Reihenfolge empfangen werden.
Ein ähnliches Verfahren ist offenbart in dem Aufsatz von Dongwook Lee et al.: "Delayed-Duplicated ACH (DDA) Algorithm for TCP Performance Enhancement to Overcome Packet Sequence Disruption in Fast-handoff of Mobile lPv6", Distributed Computing Systems Workshops, 2004, Proceedings, 24th International Conference on Hachioji, Tokyo, Japan, 23-24 Mar. 2004, Seiten 98-103, XP010695590.

Weitere Veröffentlichungen zu diesem Thema sind Yuchul Kim et al.: "Considering Spurious Timeout in Proxy for Improving TCP Performance in Wireless Networks", Globecom 2003- IEEE- Global Telecommunications Conference, Bd. 7, 01.Dezember 2003, Seiten 3673-3677, XP010677302 und US 2006/067222 A1.

Es ist die Aufgabe der Erfindung, ein Verfahren zur Verbesserung eines TCP Datenübertragungsprozesses im Fall einer Unterbrechung des physikalischen Übertragungsmediums anzugeben. Dadurch soll die Wiederaufnahme der TCP Verbindung im Fall einer Unterbrechung des physikalischen Mediums verringert werden.

Diese Aufgabe wird erfindungsgemäß durch die Merkmale des Anspruchs 1 gelöst.

Bevorzugte Ausgestaltungen und weitere, vorteilhafte Merkmale der Erfindung sind in den abhängigen Ansprüchen angegeben.

Erfindungsgemäß wird beim Client bei der Übermittlung der ACK Nachricht ein Zeitglied mit einer voreingestellten Zeit T1 gestartet, und dieselbe ACK Nachricht wiederholt an den Server übermittelt, falls beim Client nach Ablauf der Zeit T1 kein weiteres Datenpaket vom Server empfangen wurde.

Die Erfindung beruht also darauf, dass der Client erkennt, dass der Datenfluss vom Server unterbrochen wurde und dann die letzte ACK Nachricht mit einer relativ hohen Wiederholungsrate nochmals zum Server übermittelt. Der Server kann unmittelbar darauf reagieren und die Datenübertragung fortsetzen.

Damit eine wiederholte Übermittlung derselben ACK Nachricht möglich ist, ist vorgesehen, dass der Client jede übermittelte "ACK" Nachricht mindestens solange speichert, bis erneut eine ACK Nachricht gesendet werden muss.

In vorteilhafter Weise ist die Zeit T1, also die Wartezeit auf Daten des Servers, seitens des Client einstellbar.

Für einen störungsfreien Ablauf des Verbindungsaufbaus und -abbaus wird das Zeitglied während des Aufbaus und Abbaus einer Verbindung nicht aktiviert.

Außerdem kann vorgesehen sein, dass die Anzahl der wiederholten Übermittlungen derselben SYN Nachricht beim Client mittels eines Zählers C1 gezählt wird. Nach Überschreitung eines voreingestellten Schwellwertes wird keine weitere SYN Nachricht desselben Inhalts an den Server gesendet.

Die Vorteile der Erfindung liegen auf der Hand:

Nach einer Unterbrechung des physikalischen Mediums, blieb bisher der Datentransfer für den Endnutzer unterbrochen bis die im TCP Standard definierte Wiederholungsprozedur durchgeführt wird. Dies dauert mehrere Sekunden. Durch die Erfindung, wird die Zeit, für die der Datentransfer unterbrochen bleibt, nachdem das physikalische Medium wieder zu Verfügung steht, reduziert. Diese Zeit wird durch den Wert T1 des Timers bestimmt und ist Endnutzer einstellbar. Wenn vom Client das Ende des Datentransfers erkannt wird, wird die hier oben beschriebene Prozedur vom Client nicht mehr benutzt.

Die erfindungsgemäße Vorrichtung bzw. das Verfahren kann auf einem Proxy in einem Mobilfunknetz installiert sein und vom Mobilfunknetz gesteuert werden.

Nachfolgend wird die Erfindung anhand von Zeichnungen näher erläutert. Aus den Zeichnungen und der folgenden Beschreibung ergeben sich weitere Merkmale und Vorteile der Erfindung.
Figur 1 zeigt vereinfacht den erfindungsgemäßen Ablauf eines TCP Datenübertragungsprozesses im Fall einer Unterbrechung des physikalischen Übertragungsmediums.
Figur 2 zeigt vereinfacht den Ablauf des Aufbaus einer TCP Verbindung (Stand der Technik).
Figur 3 zeigt vereinfacht den Ablauf bei einer Unterbrechung einer TCP Verbindung (Stand der Technik).
Figur 4 zeigt vereinfacht den Ablauf des Abbaus einer TCP Verbindung (Stand der Technik).
Figur 5 zeigt vereinfacht den standardisierten Ablauf eines TCP atenübertragungsprozesses im Fall einer Unterbrechung des physikalischen Übertragungsmediums (Stand der Technik).

Die Figuren 2 bis 5 wurden bereits im einleitenden Teil der Beschreibung im Zusammenhang mit dem Stand der Technik beschrieben. Es wird an dieser Stelle auf die entsprechenden Textstellen verwiesen.

Beim erfindungsgemäßen Verfahren erfolgt die Erkennung eines Aufbaus und Abbaus einer Verbindung in unveränderter Weise, wie anhand der Figuren 2 und 4 weiter oben beschrieben. Im TCP Standard ist definiert, dass ein Verbindungsaufbau vom Client 10 initiiert wird durch das Senden eines IP Pakets, bei dem das "SYN"-Bit im TCP-Anteil gesetzt ist. Der Server 12 antwortet dann mit einem Paket, in welchem die "SYN"- und "ACK"-Bits im TCP-Anteil des Pakets gesetzt sind. Der Client 10 antwortet dann mit einem Paket, in welchem das "ACK"-Bit im TCP-Anteil gesetzt ist. Wenn diese drei Nachrichten zwischen dem Client 10 und dem Server 12 übermittelt wurden, kann der eigentliche Datentransfer stattfinden.

Am Ende des Datentransfers, setzt der Server 12 im letzten Datenpaket ein "Fin"-Bit. Der Client 10 übermittelt dann ein ACK. Um das erfindungsgemäße Konzept zu implementieren, benutzt der Client diese Information, um die Überwachung des Datentransfers zu stoppen. Die Verbindung wird dann standardgemäß beendet.

Wie man anhand von Figur 1 erkennt, ist zur Erkennung einer Unterbrechung des Datenflusses seitens des Client 10 erfindungsgemäß ein Zeitglied 14 (Timer) zur Überwachung der Verbindung installiert. Der Zeitwert T1 dieses Timers 14 ist einstellbar. Der Timer 14 wird nur während des eigentlichen Datentransfers benutzt und nicht während der Aufbau- und Abbauphase der Verbindung.

Der Timer 14 wird gestartet, sobald der Aufbau der Verbindung seitens des Client 10 mit der Nachricht "ACK" bestätigt wurde und wird gestoppt, wenn auf die ACK Nachricht folgend Daten vom Server 12 empfangen werden.

Wenn innerhalb der Zeit T1 keine Daten (hier Daten n+1) vom Server 12 empfangen wurden, geht der Client 10 davon aus, dass der Datenfluss unterbrochen ist und löst eine vorgegebene Aktion aus. Erfindungsgemäß speichert der Client 10 jede an den Server 12 übermittelte "ACK" Nachricht zumindest solange, bis wieder weitere Daten vom Server 12 empfangen werden und eine neue ACK Nachricht gesendet werden muss.

Die vorgegebene Aktion des Clients 10 im Fall einer Unterbrechung des Datenflusses dient einem schnellen Wiederaufbau der Verbindung. Beim Senden einer "neuen" ACK Nachricht, wird die früher gespeicherte ACK Nachricht gelöscht und durch die neue ersetzt. Wenn der Client 10 gemerkt hat, dass der Datenfluss (Daten n+1) unterbrochen ist, weil T1 abgelaufen ist ohne dass Daten vom Server 12 empfangen wurden, übermittelt der Client 10 die zuletzt gespeicherte "ACK" Nachricht nochmals an den Server 12 und wartet wiederum die Zeit T1 ab, ob Daten vom Server 12 empfangen werden.

Zusätzlich kann ein Zähler 16 beim Client 10 implementiert sein, um zu zählen, wie oft bei einer Unterbrechung des Datentransfers, dieselbe ACK Nachricht an den Server 12 übermittelt wird. Wenn der Zähler 16 einen bestimmten Grenzwert erreicht hat, stoppt der Client 10 die wiederholte Übermittlung der ACK-Nachricht. Der übliche TCP-Standard wird dann angewendet.

## Patentansprüche

1. Verfahren zur Verbesserung eines TCP Datenübertragungsprozesses, wobei nach Herstellung einer TCP Verbindung zwischen einem Client (10) und einem Server (12) vom Server (12) ein Datenpaket an den Client (10) übermittelt wird, wobei vom Client (10) der Empfang des Datenpakets gegenüber dem Server (12) durch Übermitteln einer dem empfangenen Datenpaket zugeordneten Bestätigungsnachricht, ACK Nachricht, bestätigt wird, wobei bei der Übermittlung der ACK Nachricht beim Client (10) ein Zeitglied (14) mit einer voreingestellten Zeit T1 gestartet wird,
**dadurch gekennzeichnet,**
**dass** dieselbe ACK Nachricht wiederholt an den Server (12) übermittelt wird, falls aufgrund einer Unterbrechung des physikalischen Übertragungsmediums beim Client (10) nach Ablauf der Zeit T1 kein weiteres Datenpaket vom Server (12) empfangen wurde, wobei der Client (10) jede übermittelte "ACK" Nachricht mindestens solange speichert, bis erneut eine ACK Nachricht gesendet werden muss, wobei das Zeitglied (14) während des Aufbaus und Abbaus einer Verbindung nicht aktiviert wird.

2. Verfahren nach Anspruch 1, **dadurch gekennzeichnet, dass** die Zeit T1 seitens des Client (10) einstellbar ist.

3. Verfahren nach einem der Ansprüche 1 oder 2, **dadurch gekennzeichnet, dass** die Anzahl der wiederholten Übermittlungen derselben ACK Nachricht beim Client (10) mittels eines Zählers (16) gezählt wird, und bei Überschreitung eines voreingestellten Schwellwertes keine weitere ACK Nachricht desselben Inhalts an den Server (12') gesendet wird.

4. Verfahren nach einem der Ansprüche 1 bis 3, **dadurch gekennzeichnet, dass** es auf einem Proxy in einem Mobilfunknetz installiert und vom Mobilfunknetz gesteuert wird.

5. Vorrichtung zur Durchführung des Verfahrens zur Verbesserung eines TCP Datenübertragungsprozesses im Fall einer Unterbrechung des physikalischen Übertragungsmediums nach einem der Ansprüche 1 bis 4, **gekennzeichnet durch** ein beim Client (10) eingerichtetes Zeitglied (14) zur Erfassung einer Unterbrechung der Datenübertragung vom Server (12).

6. Vorrichtung nach Anspruch 5, **gekennzeichnet durch** einen beim Client eingerichteten Zähler (16) zum Zählen von an den Server (12) übermittelten ACK Nachrichten desselben Inhalts.

7. Vorrichtung nach einem der Ansprüche 5 oder 6, **dadurch gekennzeichnet, dass** sie auf einem Proxy in einem Mobilfunknetz installiert und vom Mobilfunknetz steuerbar ist.

8. Datenverarbeitungsprogramm mit einem Programmcode, der auf einer Datenverarbeitungseinrichtung ausgeführt ein Verfahren nach einem der Ansprüche 1 bis 4 durchführt.

9. Datenverarbeitungsprogrammprodukt, das einen auf einer Datenverarbeitungseinrichtung ausführbaren Programmcode zur Durchführung des Verfahrens nach einem der Ansprüche 1 bis 4 umfasst.

## Claims

1. Method for improving a TCP data transfer process, wherein, after making a TCP connection between a client (10) and a server (12), a data packet is sent from the server (12) to the client (10), wherein receipt of the data packet is acknowledged to the server (12) by the client (10) by transmission of a message of acknowledgement, ACK message, associated with the data packet received, wherein on transmission of the ACK message a timing element (14) with a preset time T1 is started at the client (10), **characterised in that** the same ACK message is repeatedly transmitted to the server (12) in the event that, due to an interruption of the physical transmission medium at the client (10), at the end of the time T1 no further data packet has been received from the server (12), wherein the client (10) stores each transmitted "ACK" message at least until an ACK message must be sent again, wherein the timing element (14) is not activated while a connection is being established and terminated.

2. Method according to claim 1, **characterised in that** the time T1 is adjustable by the client (10).

3. Method according to one of claims 1 or 2, **characterised in that** the number of repeated transmissions of the same ACK message is counted at the client (10) by means of a counter (16), and if a preset threshold value is exceeded, no further ACK message with the same content is sent to the server (12').

4. Method according to one of claims 1 to 3, **characterised in that** it is installed on a proxy in a mobile telephone network and controlled by the mobile telephone network.

5. Apparatus for carrying out the method for improving a TCP data transfer process in case of interruption of the physical transmission medium according to one of claims 1 to 4, **characterised by** a timing element (14) installed at the client (10) for detection of an interruption of data transmission from the server (12).

6. Apparatus according to claim 5, **characterised by** a counter (16) installed at the client for counting ACK messages with the same content transmitted to the server (12).

7. Apparatus according to one of claims 5 or 6, **characterised in that** it is installed on a proxy in a mobile telephone network and controllable by the mobile telephone network.

8. Data processing program with a program code which, executed on a data processing apparatus, carries out a method according to one of claims 1 to 4.

9. Data processing program product which comprises a program code that can be executed on a data processing apparatus for carrying out the method according to one of claims 1 to 4.

## Revendications

1. Procédé pour perfectionner un processus de transmission de données TCP, selon lequel après l'établissement d'une connexion TCP entre un client (10) et un serveur (12), le serveur (12) transmet un paquet de données au client (10), étant précisé que le client (10) accuse réception du paquet de données auprès du serveur (12) en transmettant un message d'accusé de réception, message ACK, associé au paquet de données reçu, et que lors de la transmission du message ACK, une minuterie (14) est démarrée chez le client (10) avec une durée T1 préréglée,
**caractérisé en ce que** le même message ACK est transmis à plusieurs reprises au serveur (12) au cas où en raison d'une interruption du support de transmission physique au niveau du client (10) aucun autre paquet de données n'a été reçu par le serveur (12) au bout d'une durée T1, le client (10) stockant chaque message "ACK" transmis, au moins jusqu'à ce qu'un message ACK doive à nouveau être envoyé, la minuterie (14) n'étant pas activée pendant l'établissement et la fin d'une liaison.

2. Procédé selon la revendication 1, **caractérisé en ce que** la durée T1 est réglable côté client (10).

3. Procédé selon l'une des revendications 1 ou 2, **caractérisé en ce que** le nombre de transmissions répétées du même message ACK est compté chez le client (10) à l'aide d'un compteur (16), et si une valeur seuil préréglée est dépassée, aucun autre message ACK du même contenu n'est envoyé au serveur (12').

4. Procédé selon l'une des revendications 1 à 3, **caractérisé en ce qu'**il est installé sur un proxy dans un réseau de téléphonie mobile et est commandé par le réseau de téléphonie mobile.

5. Dispositif pour la mise en oeuvre du procédé pour perfectionner un processus de transmission de données TCP en cas d'interruption du support de transmission physique selon l'une des revendications 1 à 4, **caractérisé par** une minuterie (14) installée chez le client (10) pour détecter une interruption de la transmission de données par le serveur (12).

6. Dispositif selon la revendication 5, **caractérisé par** un compteur (16) installé chez le client pour compter les messages ACK du même contenu qui sont transmis au serveur (12).

7. Dispositif selon l'une des revendications 5 ou 6, **caractérisé en ce qu'**il est installé sur un proxy dans un réseau de téléphonie mobile et est apte à être commandé par le réseau de téléphonie mobile.

8. Programme de traitement de données avec un code de programme qui, quand il est exécuté sur un dispositif de traitement de données, met en oeuvre un procédé selon l'une des revendications 1 à 4.

9. Produit de programme de traitement de données qui comprend un code de programme apte à être exécuté sur un dispositif de traitement de données, pour la mise en oeuvre du procédé selon l'une des revendications 1 à 4.
